# EUROPEAN PATENT SPECIFICATION

(11) **EP 2 042 885 B1**
(45) Date of publication and mention of the grant of the patent: **21.10.2009**
(21) Application number: 07075834.7
(22) Date of filing: 26.09.2007
(51) Int. Cl.: G01S 5/12, G01S 5/06, H04L 12/28, H04L 12/56

(54) **System and method for both wireless communication and distance estimation between a plurality of devices in a wireless network**
System und Verfahren zur drahtlosen Kommunikation und zur Schätzung des Abstands zwischen mehreren Geräten in einem drahtlosen Netzwerk
Système et procédé pour la communication sans fil et l'estimation de distance entre plusieurs dispositifs dans un réseau sans fil

(43) Date of publication of application: 01.04.2009
(73) Proprietor: Acorde Technologies, S.A., 39002 Santander Cantabria (ES)
(72) Inventor: Álvarez Vázquez, Alvaro, 33006 Oviedo (Asturias) (ES); De Arriba Rodríguez, Francisco, 33209 Gijón (Asturias) (ES)
(74) Representative: Carvajal y Urquijo, Isabel

(56) References cited:
- EP-A- 1 515 488
- WO-A-20/04023740
- US-A1- 2003 210 737
- US-A1- 2003 236 866
- US-A1- 2004 095 920
- US-A1- 2005 002 473
- US-A1- 2005 018 762
- US-A1- 2006 268 908
- US-B1- 6 351 652
- US-B1- 7 046 716
- US-B2- 6 952 181
- US-B2- 7 020 224

## Description

### Field of the invention

The present invention describes a method and system for both simultaneous wireless communication and distance estimation between two or more devices in a wireless network. This distance estimation allows further localization and positioning of different devices by means of triangulation and synchronization procedures.

This system can interface with other existing or future wireless or wired communication networks. The availability of position information of the different nodes allows the implementation of smart and intelligent routing techniques, as well as real time path reconfiguration. The scope of the invention mainly covers low and medium data rate communication systems (from bytes to few mega bytes per second), but can be extended to higher data rates.

### Background of the invention

The requirements for new communication systems able to transmit voice and data in a wireless manner, imposes the development of new architectures, in order to incorporate advanced features like smart routing and additional services like device positioning. Those approaches has been driven till now through narrowband systems, where the some distance is computed through power estimation, angle or time of arrival techniques, providing poor accuracies. In US6952181 "Locating a mobile station using a plurality of wireless networks and applications therefor", where a system uses a plurality of mobile station locating technologies, including those based on, two-way TOA (Time Of Arrival) and TDOA (Time Difference Of Arrival); home base stations and distributed antenna provisioning. The system is useful for 911 emergency calls, tracking, routing, people and animal location including applications for confinement to and exclusion from certain areas.

Moreover, the intensive use of the radio spectrum implies harder processes for new licenses and new system approval from the regulatory bodies. Therefore new architectures, based on non-continuous transmission of the radio signals (burst or pulsed transmissions) can be employed in those wireless communications. An example of those systems can be found in US 6,351,652 B1 "Mobile Communications Systems and Method Utilizing Impulse Radio".

One of the most critical part in a Impulse Radio Communication system is the receiver design. Many of the approaches proposed by other authors are based on complex correlator structures, where the incoming signal is multiplied in time with a pulse template, as is presented in US 7,020,224 B1 "Ultrawideband Correlating Receiver": This invention allows the recovery of phase-modulated data for an ultra-wideband receiver. An incoming signal may be a plurality of ultra-wideband (UWB) pulses wherein each of the pulses includes data encoded within a phase of the pulse. One method herein described initially estimates timing of the incoming signal with the use of a correlator and an energy estimator. The correlator may include a filter whose transfer function is matched to an output filter of a UWB transmitter. The matched filter shapes a locally generated pulse to closely represent an expected incoming signal. Additional components of the correlator may include a mixer, amplifier, and low-pass filter. The incoming signal may be correlated with a local template signal then sent to the energy estimator.

Aditionally the energy estimator may include an absolute value detector such as a rectifier or a square law detector that outputs the square of the incoming signal. The function of the absolute value detector is to provide an energy pulse to an integrator. The integrator sums the signal across a finite time period and provides its output as a coarse timing signal to a local signal generator. This summed signal gives the receiver a coarse timing estimate of the incoming signal. This coarse signal is appropriate for detection and demodulation of position based signal modulation schemes such as Pulse Position Modulation.

Moreover, some other inventions refers to the whole communication system, such as US 6,351,652 "Mobile communications system and method utilizing impulse radio", where a method and apparatus for wireless communication and more particularly, a method and apparatus for wireless communication utilizing impulse radio, wherein an impulse radio communication system integrates with existing cellular/PCS wireless communication systems and/or current land line communication systems. Another example can be found on US 7,046,716 "Dual-mode ultra wideband and wireless local area network communications", where a dual-mode ultra wideband (UWB) and wireless local area network (WLAN) communication transceiver is used to implement two disparate systems of UWB and WLAN communications within a single device. During the UWB mode, the communication transceiver sends and receives the UWB signal at very-high data rate with a relative short transmission range. During the WLAN mode, the communication transceiver sends and receives the WLAN signal at a relative low data rate, but with a longer transmission range. Thereby, trade-off benefits of the dual-mode UWB and WLAN communication transceiver can be mutually utilized to achieve seamless wireless broadband communications between two different standards. Other examples are presented also in US 2006/0268908 and in US 2003/0236866.

However, there are no impulse radio systems providing both location and communication features simultaneously and making use of the positioning information to improve the communication network links, which is one of the major achievements of the present invention.

Moreover, since traditional ad-hoc routing techniques are not usually fitting the smart wireless networks requirements, specific multihop wireless protocols have to be developed. Among many other considerations, the need for scalability, and the variable topology of the networks must be included. The design must ponder that communications nodes are limited in power, computation and memory.

Some of the most important issues to be covered by the networking layer involve the addressing (whose allocation may vary depending on the different network topologies), the device discovery (including its capabilities), the routing (techniques and tables storage) and the security.

### Summary of the invention

The invention relates to a method and system for both wireless communication and distance estimation between a plurality of devices in a wireless network according to claims 1 and 5, respectively. Preferred embodiments of the system and of the method are defined in the dependent claims.

The proposed system is based on the radiation of RF pulsed signals in order to perform both communication and location procedures. The node architecture comprises a transmitter, which handles the data signals, modulate the information into radio frequency burst type signals, and radiates them to the air, and a receiver, able to capture as much energy as possible, demodulate the incoming signal, estimate the distance between transmitter and receiver and give data output. The data is modulated following a Pulse Amplitude (PAM) or On-Off Keying modulation, at a fixed (by the control unit) burst repetition frequency. Each transmitter node has a data interface with a major communication device (like a laptop, cellular, PDA or any other electronic device), a control unit, which handles the incoming data, fix the packet data structure, calculates checksums and integrates error mitigation techniques, a burst generation module, and amplification and filter modules. Finally the signal is radiated to the air by an antenna.

The receiver captures the radiated energy through its antenna, amplifies it through an analog gain chain, downconverts the incoming signal from the radio frequency band to baseband employing a burst detector, and finally demodulates the data, as well as estimates the distance between transmitter and receiver through phase and time delay between transmitter clock and receiver recovered clock.

The present invention comprises a method and system for both wireless communication and distance estimation between a plurality of devices in a wireless network. The wireless network comprises one central monitoring node CMN, a plurality of infrastructure nodes IN whose position is known prior to a network initialization process, and a plurality of system operative nodes SON, each node being equipped with a transceiver.

The method comprises:
- the network initialization process, in which the SON and their estimated positions are obtained, comprising the following steps:
   - starting a beacon transmission from the CMN to the IN;
   - starting each IN a beacon transmission to determine which SON are under their coverage, called associated SON;
   - estimating each IN the distance between itself and each associated SON via a ranging process, performed by calculating the propagation delay between both nodes;
   - storing each IN the information relating the associated SON and the estimated distance to each associated SON in a associated dynamic node table (ADNT);
   - reporting each IN their ADNT to the CMN;
   - calculating through triangulation the estimated absolute position of the SON;
- obtaining, by using a smart network routing protocol, message paths between nodes established by the shortest paths available, storing said message paths in path propagation tables (PPT);
- transmitting each message of the wireless network from the origin node to the destination node through the route established in the PPT.

The propagation delay between the IN and each associated SON can be obtained by a roundtrip-time-of-flight (RTOF) process, by measuring the complete round-trip elapsed time in a pair-wise communication between the IN and the SON.

The path propagation tables (PPT) are preferably stored at each node of the wireless network. The wireless communication between nodes is preferably established via impulse radio.

The system object of the present invention comprises:
- a plurality of system operative nodes SON;
- one central monitoring node CMN, configured for calculating through triangulation the estimated absolute position of the SON and for interfacing the final user of the network, in order to show the network status, membership, and monitor and control the communication flow;
- a plurality of infrastructure nodes IN, whose position is known prior to a network initialization process in which the SON and their estimated positions are obtained, each IN being configured, in the network initialization process, for:
   - determining which SON are under its coverage, called associated SON;
   - estimating the distance between itself and each associated SON via a ranging process performed by calculating the propagation delay between both nodes;
   - storing the information relating the associated SON and the estimated distance to each associated SON in a associated dynamic node table (ADNT);
   - reporting each IN their ADNT to the CMN;

Each node of the system is equipped with a transceiver. The CMN is also capable to obtain, by using a smart network routing protocol, message paths between nodes established by the shortest paths available, storing said message paths in path propagation tables (PPT). Each message of the wireless network is transmitted from the origin node to the destination node through the route established in the PPT.

The transceiver that can be used in a node of a wireless network, comprises:
- a transmitter comprising:
   - a communication interface, configured for receiving input data from an electronic device;
   - a control and modulation unit, with:
      - a digital processor, configured for receiving the input data from the communication interface and building data packages;
      - a FIFO memory, fed by a parallel output of the digital processor, configured for storing the data packages;
      - a parallel to serial converter configured for receiving the data packages and synchronously sending said data packages by a serial interface to a pulse generator module;
      - a radio frequency module incorporating:
         - the pulse generator module, configured for converting digital signal from the parallel to serial converter into analog signal;
         - a pulse amplifier for amplifying the analog signal;
         - filtering means for filtering the analog signal;
      - an antenna, connected to the filtering means;
      - a power module;
- a receiver comprising:
   - an antenna;
   - a radio frequency module with:
      - a low noise block LNB connected to the antenna and incorporating a low noise amplifier LNA and a wideband attenuator;
      - a bandpass filter for filtering the analog signal received from the LNB;
      - pulse detection means, configured for receiving the filtered signal from the bandpass filter and obtaining a peak-detected equivalent signal;
      - an analog to digital converter ADC for converting said equivalent signal into a digital signal;
   - a synchronization module for performing the phase adjustment and correcting long term stability of a crystal clock, being equipped with:
      - the crystal clock;
      - a clock buffer connected to the crystal clock;
      - a variable delay circuit for controlling the delay for correct period sampling;
   - a demodulation and control module incorporating:
      - a microprocessor connected to the variable delay circuit and configured for controlling the delay for correct period sampling and for synchronization algorithm implementation;
      - a FIFO memory configured for storing the received data, and the data to be transmitted (the FIFO allows to separate the time domains between the PRP and the microprocessor speed);
      - a microprocessor configured for processing the received data and interfacing with higher communication layers;
   - a communication interface;

The pulse detection means can be, for instance, a peak-hold detector or a matched filter pulse detector.

### Brief description of the drawings

The accompanying drawings, which are included to provide a further understanding of the invention and are incorporated in and constitute a part of this specification, illustrate embodiments of the invention and together with the description serve to explain the principles of the invention.

In the drawings:
- Figure 1 shows a possible architecture configuration of the transceiver that can be used in the system or method object of the present invention (transmitter and receiver);
- Figure 2A shows an example of a transmitted UWB impulse, and Figure 2B shows a train of short pulse width radio signals;
- Figure 3 shows a possible architecture configuration of the transmitter;
- Figure 4 shows a possible architecture configuration of the receiver;
- Figure 5 shows a diagram of the localization and positioning method employed in the invention;
- Figure 6 shows a possible diagram of the system, whit the three different node categories.
- Figure 7 shows an example of routing a message between different nodes of the system.

### Description of a Preferred Embodiment

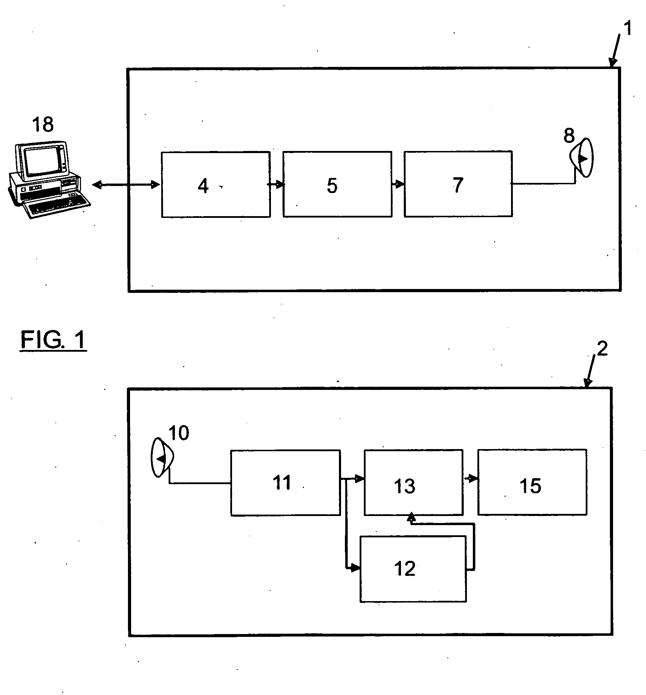

The transceiver is composed in two main subsystems, as it is shown in **figure 1**, the transmitter 1 and the receiver 2 modules. Each module is divided into different blocks. The transmitter is divided into the communication interface 4 (with a major device, like a PC, PDA, or any other electronic device), the control and modulation unit 5, the radio frequency block 7 and the radiation unit 8 (antenna), while the receiver is composed by the radiation unit 10 (antenna), the radio frequency block 11, the synchronization module 12, the demodulation and control module 13, and the communication interface 15.

The main objective of this invention is to provide a wireless data communication link, simultaneously with location and positioning of the different communication devices. It is an additional objective of this invention to provide a wireless secure and safe as well as non detectable wireless link. In order to achieve these conditions the proposed system does not employ any continuous signal or carrier, and the employed spectrum is spread for several Gigahertzs.

The data from the major electronic device 18 (like a PDA, PC, or any other communication device) is transferred to the proposed system via a standard communication link 4 (could be a Ethernet, USB, PCI... interface), and get by the modulation and control unit 5. The modulation unit is able to handle this data, and build wireless data packages, with their correspondent MAC, network or application headers. Once the wireless package is built, and stored in a memory device, it is sent synchronously by a serial interface (if data is stored in a parallel way, it must be converted to serial), to a burst generation circuit, which could be implemented in different ways, filtered and/or upconverted to a higher frequency.

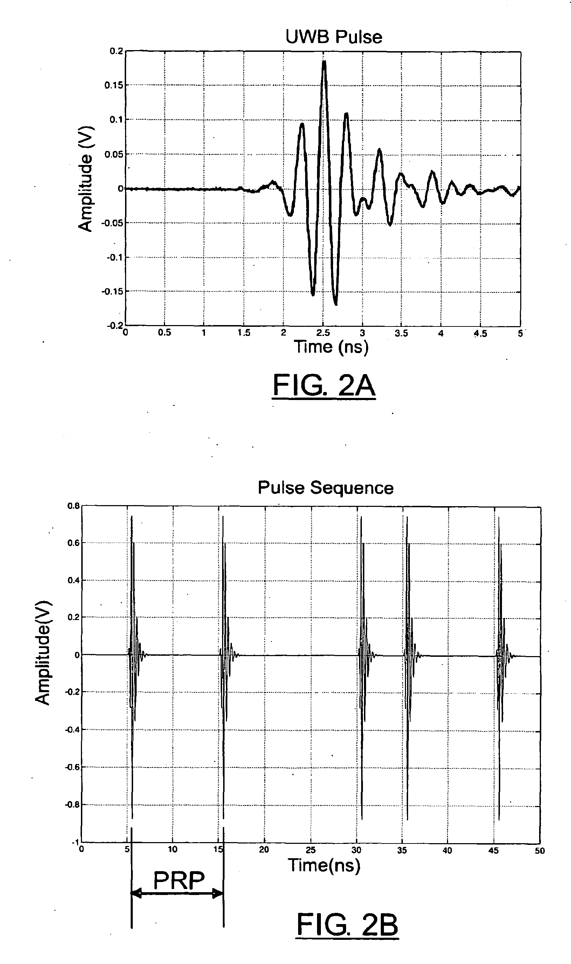

The transmitted signal is based in a train of short pulse width radio signals, following a fixed pulse repetition frequency (PRP), as it is shown in **figure 2B. Figure 2A** shows an example of a transmitted UWB impulse. The clock reference is set in the order of tens of MHz through a crystal reference oscillator, in order to keep the low power consumption in the whole system.

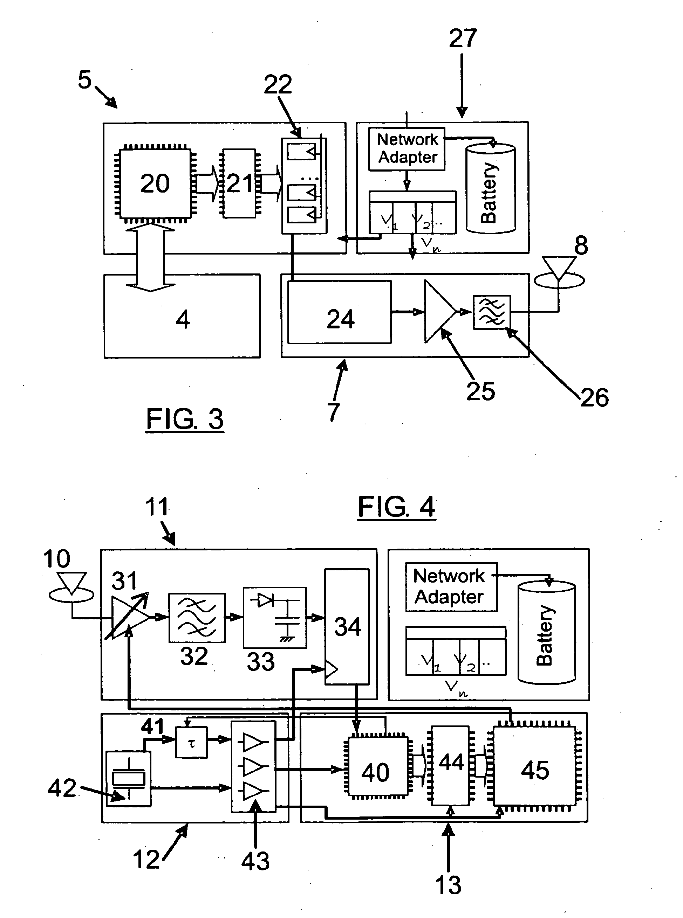

The transmitter, which architecture is shown in **figure 3**, is based on a modulation and control digital processor core 5, a UWB pulse generator module 24 which converts digital signals into analog ones, an analog amplifier/filtering stage (25, 26) and the antenna 8. The digital processor 20 chosen for this application should provide low current and low voltage (for instance, 3.3 Volts) operation conditions. This digital processor 20 has been set up to work with a parallel output which feeds a FIFO memory 21, used to store the data frames. Then, a parallel to serial converter 22 is implemented with a simple shift register, next, a pulse generator 24, and finally a pulse amplifier 25 and the antenna 8.

There are different alternatives for pulse generator modules, from the step recovery diode (SRD) circuit, to fast CMOS or BiCMOS SiGe low powered circuits. SRD pulse generators have well known behaviour and characterization for simulation tools, as well as easy integration into PCB breadboards without making use of a MMIC foundry.

The generated signal should be amplified and filtered. For the amplification, a pulse amplifier 25 can be used (a low power amplifier, for instance), providing wide operational bandwidth, good matching in the frequency of interest and high gain, while for the filtering stage the impulse radio signal has been filtered between 3 and 5 GHz with a filter 26, for instance a microstrip filter or a ceramic filter..

Additionally, the transmitter integrates a power module 27 for feeding the different modules.

In order to keep the simplicity and low power requirements for the receiver 2, it is based on a simple non-coherent energy detection scheme, as it is shown in **figure 4**. The core of its design is based on pulse detection means 33, followed by a wideband (500 MHz) Analog-to-Digital converter (ADC) 34.

The front-end is made with a SiGe low noise block (LNB) 31, composed by a low noise amplifier (LNA) followed by a wideband attenuator in order to provide wider dynamic ranges. This analog stage is fed by a wideband antenna 10, matched in the 3 to 5 GHz frequency band. The output of the LNB 31 feeds a bandpass filter 32, and then is transferred to the pulse detection means 33 based for instance on Schottky diodes (Zero biased) in a voltage doubler configuration, feeding a few picoFarads capacitor. Nevertherless this peak-hold detector could be changed by a correlator or matched filter pulse detector, which has a higher performance and is more effective against noise and interferences. However, the power consumption and the price of the specific digital logic and analog parts to be implemented, make these alternatives non suitable for a real low cost device.

The peak-detected equivalent signal is also a wideband signal, but at baseband and with smaller bandwidth (the bandwidth depends on the capacitor value and the impedance load at the input of the ADC 34). Therefore, a broadband ADC 34 could be employed, relaxing the cost and power consumption requirements (high speed, large bandwidth ADCs are expensive in cost and power consumption). For this application it has been chosen, as an example for this particular embodiment, a 8 bits ADC, up to 100 MHz sampling frequency, 475 MHz analog bandwidth, and 90 mW of power consumption. The maximum sampling frequency is directly related to the maximum PRF (Pulse Repetition Frequency) supported by the receiver architecture.

The gain selection block can be done digitally, with direct control from the processing module, and gain values are selected through monitoring of the AD converters outputs. The synchronization block 12 is controlled by a baseband microprocessor 40, normally a DSP (Digital Signal Processor). The DSP is directly connected to the variable delay circuit 41, and controls the delay for correct period sampling.

The synchronization module 12 is one of the most important key blocks in the pulsed radio receiver architecture. Since pulses follow a fixed PRF, the main issue is to perform the phase adjustment and correct long term stability of a crystal clock 42, which is connected with a clock buffer 43. For phase adjustment two different alternatives have been covered, both based on delay line topologies for fine (subnanosecond range) synchronization purposes. The first one is based on a 500ps step, 8 bit digitally programmable delay line, which is controlled by a microprocessor or a DSP which is continuously tracking the incoming sequence and performing the fine alignment between the received signal and the reference clock. This circuit matches the specifications required for the synchronization and sliding procedures for the sampling clock. The second one is based on a frequency divider and PLL (Phase-locked Loop)-VCO system, able to delay signals up to 80-100 MHz, with time steps below 1 ns. The long-term stability is corrected with small resynchronization periods within the data packet. The header of the data packet must have a "long" synchronization word, for initial phase alignment, and then small words for minor real time delay corrections, for long-term stability differences between transmitter and receiver crystals. All these processes are controlled and managed by the DSP, with the samples collected by the ADCs.

Localization will become an important factor in smart wireless networks, mainly because, most of the times, the positions of the nodes can not be determined in advance, or the nodes are moving.

The envisioned applications discard the employ of GPS for self-location (costs and feasibility), and leaves the question on a local positioning basis, what has led to investigate the relative positioning algorithms, in which range measurements between devices and its neighbours (not only the reference devices) are considered as a way of improving accuracy. In those systems, two types of devices coexist: blindfolded devices with unknown position that has to be estimated, and reference devices with a priori knowledge of their absolute (or local) location.

The most commonly used measurement techniques for the position estimation are: Angle Of Arrival (AOA), Received Signal Strength (RSS), and propagation-time based techniques which includes Time Of Arrival (TOA) and Time Difference Of Arrival (TDOA).

The requirement of directional antennas or antenna arrays to implement the AOA method invalids its application in a low-cost concept; whereas the propagation-loss resolution for RSS, far from being an easy task without the proper and precise models, most of the times delivers moderate position accuracy.

Time Based localization techniques rely on the accurate estimation of time difference. In TOA, one-way propagation time is measured, calculating the distance from this datum. The use of at least four base stations and geometric equations is required for a 3-D location. This technique requires precise time synchronization between all devices reference and blindfolded ones, which is totally impractical in our case. In TDOA, the time difference is computed from signals coming from different references, by statistical and processing (filters) means, in order to avoid noise and multipath corruptions, making use of the cross correlation maximum value. Synchronization between reference devices is required.

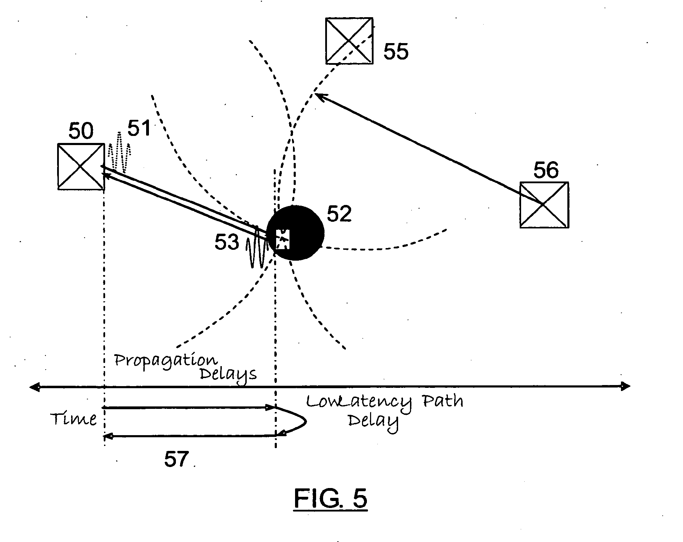

The present invention employs a different technique, allowing the replacement of the absolute synchronization requirement by a reasonable clock synchronization. The technique, known as roundtrip-time-of-flight (RTOF) or more commonly, two-way TOA, and shown in **figure 5**, consists of measuring the complete round-trip elapsed time in a pair-wise communication. A first reference device 50 sends a pulse localization packet 51, the blindfolded device 52 synchronizes to this pulse time reference, and reply with another pulse localization packet 53 to the first device 50, through a low latency specific module. Then, the first device 50 synchronizes to the incoming reply, and estimates the delay between the transmitted 51 and received 53 pulses. Finally, the distance is computed directly from the propagation speed and time delay, after having subtracted the known latency.

This procedure (repeated for, at least, another two reference devices 55-56) provides the 3D relative position of the blindfolded device 52. Absolute positions could be known if reference devices know their global coordinates.

In time-based wireless location techniques, the main sources of error come from multipath and Non-Line-Of-Sight (NLOS) propagation. Concerning multipath, if the temporal features (multipath components) are finer than 1/B where B is the bandwidth of the signal, they can not be resolved in the cross-correlation. Fortunately, the inherently fine temporal resolution of UWB permits to discern accurately the multipath components, making this technology optimal for high precision positioning applications. The present invention works with a signal bandwidth higher than 1 GHz, enabling location accuracies better than 1 ft. (if no other error exists).

NLOS error detection and correction has been widely covered for cellular systems, but its application to ad-hoc networks is not trivial: sometimes because there is no LOS path between blindfolded and any of the reference devices, the blindfolded devices are stationary, no cell layout maybe applied, etc.

This localization processes allow the implementation of smart wireless networking features. Once the network is set-up, the device discovery process starts with a beacon transmission, scheduled at certain periodicity, providing information related to the device's ID, capabilities, and metric value to the gateway. It may happen that a specific device received beacons from several nodes, in that case, it will choose the best one to join to, on a metric basis, providing, then, its capabilities.

As a result of the memory constraints, and the huge number of devices potentially forming the network, the routing tables are limited, and hence, they suffer from ageing. This means that routes are maintained as long as they are active, being labelled as "inactive" when are not used. This simplified version of the AODV (Ad-Hoc On-Demand Distance Vector) protocol performs route discovering when requested by sources, overwriting previous inactive entries.

The route discovery process implemented in the present invention employs a broadcast message from the demanding source, which is re-broadcasted to extend the range until the requested node is found. Next step includes the packet sending from the discovered node to the gateway (central node) in order for him to know how to reach it, establishing this way the route, while rerouting the packet from the demanding source. The difference between this methodology and the route request from classic AODV is based on the limitation of prefixed routing towards the gateway.

The current approach presents some advantage in terms of network activity when dealing with multicast and data aggregation. The tree structure provides some benefits when the multicast group belongs to the same branch and level, allowing single packet transportation until the previous level, which delivers it to the addressed nodes. In a reverse way, different packets created in the same branch and level are joined into a single one, delivered to the gateway, minimizing this way the traffic load.

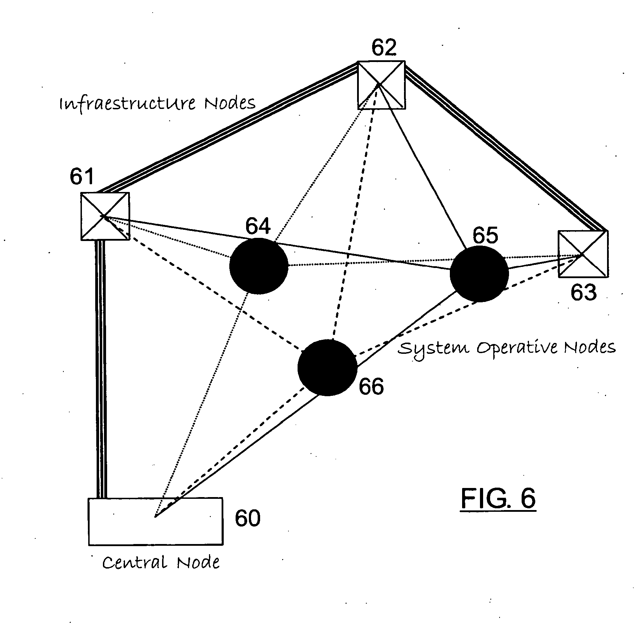

The system is divided into three different node categories, as it is shown in **Figure 6**. There is one central monitoring node (CMN) 60 which interfaces with the final user of the network. This central monitoring node CMN 60 can be assigned dynamically and must change during the current operation of the system (it has not to be fixed since the set-up of the network). The second level is composed by the infrastructure nodes (IN) (61, 62, 63), able to interact directly with the central node and all the other system nodes, and locate all the other nodes. The third level comprises the system operative nodes (SON) (64, 65, 66), able to collect and transmit data to the infrastructure nodes (61, 62, 63) or directly to the central monitoring node 60. The position of the infrastructure nodes IN (61, 62, 63) must be known in advance in order to allow precise localization of the system nodes, and this can be done through pre-knowledge of their positions (before to the set-up and initialization of the nodes), which reduces the flexibility of the network, or through automatic absolute (not relative) location systems, like GPS.

The network initialization process starts with a beacon transmission from the CMN 60 to the IN (61, 62, 63). When the communication link is established the IN start a beacon transmission to know which nodes are under their coverage, and report their associated dynamic node table (ADNT) to the CMN 60.

The location procedure starts when the IN (61, 62, 63) know which nodes are under their coverage. Each IN estimates through ranging the distance between itself and each associated SON. The ranging process is performed by the estimation of the propagation delay between both nodes, and the propagation delay can be obtained by a call and reply message protocol 57 between IN and SON. Once the distance is obtained is written in the ADNT of the IN and sent to the CMN 60. When the CMN 60 collects all the ADNTs from the IN (61, 62, 63), it is able to process through triangulation the relative position of each individual SON (64, 65, 66), and through the knowledge of the absolute position of the IN (61, 62, 63), the absolute position of the SON (64, 65, 66).

Once the location of each node is known, the smart network routing protocols can be implemented, since all nodes positions are known, it is possible to set-up message paths between different nodes by the shortest paths available, providing fast and reliable communication among the system nodes. The path propagation tables (PPT) can be stored at each node in order to provide fast and efficient routing between the nodes.

Finally every message that must be transmitted between different nodes of the system is routed taking into account the propagation path between origin at node 74 and destination at node 713 though the intermediate nodes 76 and 79.

The main operative difference between IN and SON is placed in the location protocol, because both are identical from the communication protocol point of view. Moreover, it must have more relevance as communication node a SON rather an IN.

Every time a node is associated or disassociated to the network the ADNT must be updated by their associated INs.

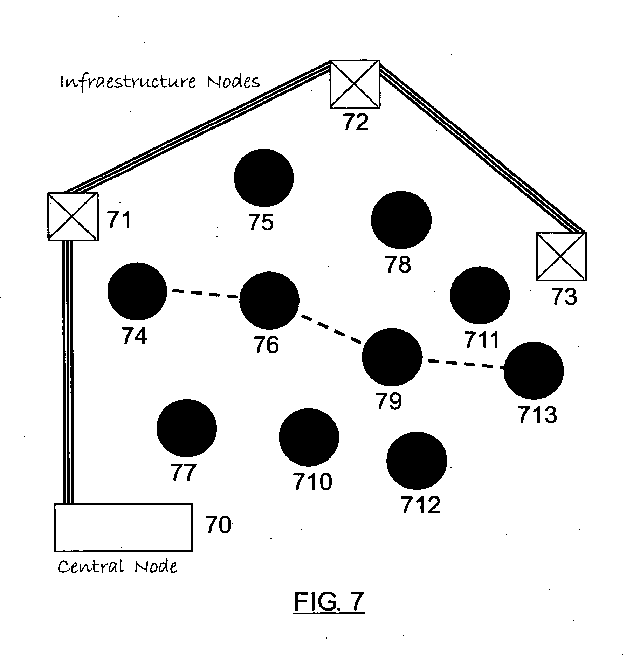

Finally, in **Figure 7** it is shown an example of routing a message between different nodes of the system.

## Claims

1. Method for both wireless communication and distance estimation between a plurality of devices in a wireless network, the wireless network comprising one central monitoring node CMN (60), a plurality of infrastructure nodes IN (61,62,63) whose position is known prior to a network initialization process, and a plurality of system operative nodes SON (64,65,66), each node being equipped with a transceiver, **characterized in that** the method comprises:
• the network initialization process, in which the SON and their estimated positions are obtained, comprising the following steps:
- starting a beacon transmission from the CMN (60) to the IN (61,62,63);
- starting each IN a beacon transmission to determine which SON are under their coverage, called associated SON;
- estimating each IN the distance between itself and each associated SON via a ranging process performed by calculating the propagation delay between both nodes;
- storing each IN the information relating the associated SON and the estimated distance to each associated SON in a associated dynamic node table (ADNT);
- reporting each IN their ADNT to the CMN (60);
- calculating through triangulation the estimated absolute position of the SON (64,65,66);
• obtaining, by using a smart network routing protocol, message paths between nodes established by the shortest paths available, storing said message paths in path propagation tables (PPT);
• transmitting each message of the wireless network from the origin node to the destination node through the route established in the PPT.

2. Method according to claim 1, **characterized in that** the propagation delay between the IN and each associated SON is obtained by a roundtrip-time-of-flight (RTOF) process (57), by measuring the complete round-trip elapsed time in a pair-wise communication between the IN and the SON.

3. Method according to any of the previous claims, **characterized in that** the path propagation tables (PPT) are stored at each node of the wireless network.

4. Method according to any of the previous claims, **characterized in that** the wireless communication between nodes is established via impulse radio.

5. System for both wireless communication and distance estimation between a plurality of devices in a wireless network, **characterized in that** comprises:
- a plurality of system operative nodes SON (64,65,66);
- one central monitoring node CMN (60), configured for calculating through triangulation the estimated absolute position of the SON (64,65,66) and for interfacing the final user of the network, in order to show the network status, membership, and monitor and control the communication flow;
- a plurality of infrastructure nodes IN (61,62,63), whose position is known prior to a network initialization process in which the SON and their estimated positions are obtained, each IN being configured, in the network initialization process, for:
• determining which SON are under its coverage, called associated SON;
• estimating the distance between itself and each associated SON via a ranging process performed by calculating the propagation delay between both nodes;
• storing the information relating the associated SON and the estimated distance to each associated SON in a associated dynamic node table (ADNT);
• reporting each IN their ADNT to the CMN (60);
each node of the system being equipped with a transceiver;
**in that** the CMN (60) is also capable to obtain, by using a smart network routing protocol, message paths between nodes established by the shortest paths available, storing said message paths in path propagation tables (PPT);
and **in that** each message of the wireless network is transmitted from the origin node to the destination node through the route established in the PPT.

6. System according to claim 5, **characterized in that** the propagation delay between the IN and each associated SON is obtained by a roundtrip-time-of-flight (RTOF) process (57), by measuring the complete round-trip elapsed time in a pair-wise communication between the IN and the SON.

7. System according to any of claims 5-6, **characterized in that** the path propagation tables (PPT) are stored at each node of the wireless network.

8. System according to any of claims 5-7, **characterized in that** the wireless communication between nodes is established via impulse radio.

## Patentansprüche

1. Verfahren sowohl für die drahtlose Kommunikation als auch für die Abstandsabschätzung zwischen mehreren Geräten in einem drahtlosen Netzwerk, wobei das drahtlose Netzwerk umfasst: einen zentralen Überwachungsknoten CMN (60), mehrere Infrastrukturknoten IN (61,62,63), deren Position vor einem Netzwerk-Initialisierungsprozess bekannt ist, und mehrere Systembetriebsknoten SON (64,65,66), wobei jeder Knoten mit einem Sendeempfänger ausgestattet ist, **dadurch gekennzeichnet, dass** das Verfahren umfasst:
• den Netzwerk-Initialisierungsprozess, in welchem die SON und ihre abgeschätzten Positionen erhalten werden, die folgenden Schritte umfassend:
- Starten einer Ortungssignalübertragung vom CMN (60) zu den IN (61,62,63);
- Starten einer Ortungssignalübertragung eines jeden IN, um zu bestimmen, welcher SON von ihm erfasst wird, der als zugehöriger SON bezeichnet wird;
- an jedem IN den Abstand zwischen ihm und jedem zugehörigen SON über einen Entfernungsmessvorgang abschätzen, der durch Berechnen der Laufzeitverzögerung zwischen beiden Knoten ausgeführt wird;
- an jedem IN in einer zugehörigen dynamischen Knotentabelle (ADNT) die Informationen speichern, die den zugehörigen SON und den abgeschätzten Abstand zu jedem zugehörigen SON betreffen;
- an jedem IN dessen ADNT an den CMN (60) melden;
- durch Triangulation die abgeschätzte absolute Position des SON (64,65,66) berechnen;
• unter Verwendung eines intelligenten Netzwerkrouting-Protokolls die Nachrichtenwege zwischen den Knoten erhalten, welche durch die kürzesten verfügbaren Wege festgelegt sind, Speichern der Nachrichtenwege in Wegausbreitungstabellen (PPT);
• Übertragen einer jeden Nachricht des drahtlosen Netzwerks von dem Ursprungsknoten zum Bestimmungsknoten über die Route, die in den PPT festgelegt ist.

2. Verfahren nach Anspruch 1, **dadurch gekennzeichnet, dass** die Laufzeitverzögerung zwischen dem IN und jedem zugehörigen SON durch einen Schleifenlaufzeitvorgang (RTOF - round-trip-time-of-flight) (57) erhalten wird, indem die gesamte auf dem Hin- und Rückweg verstrichene Zeit bei einer paarweisen Kommunikation zwischen dem IN und dem SON gemessen wird.

3. Verfahren nach einem der vorhergehenden Ansprüche, **dadurch gekennzeichnet, dass** die Wegausbreitungstabellen (PPT) an jedem Knoten des drahtlosen Netzwerks gespeichert werden.

4. Verfahren nach einem der vorhergehenden Ansprüche, **dadurch gekennzeichnet, dass** die drahtlose Kommunikation zwischen den Knoten über Impulsradio hergestellt wird.

5. System sowohl für die drahtlose Kommunikation als auch für die Abstandsabschätzung zwischen mehreren Geräten in einem drahtlosen Netzwerk, **dadurch gekennzeichnet, dass** es umfasst:
- mehrere Systembetriebsknoten SON (64,65,66),
- einen zentralen Überwachungsknoten CMN (60), der konfiguriert ist für das Berechnen der abgeschätzten absoluten Position des SON (64,65,66) durch Triangulation und für das Herstellen einer Schnittstelle zum Endanwender des Netzwerks, um den Netzwerkstatus, die Zugehörigkeit anzuzeigen und den Kommunikationsfluss zu überwachen und zu steuern,
- mehrere Infrastrukturknoten IN (61,62,63), deren Position vor einem Netzwerk-Initialisierungsprozess bekannt ist, in dem die SON und ihre abgeschätzten Positionen erhalten werden, wobei jeder IN im Netzwerk-Initialisierungsprozess konfiguriert wird für:
• Bestimmen, welcher SON von ihm erfasst wird, der als zugehöriger SON bezeichnet wird;
• Abschätzen des Abstandes zwischen ihm und jedem zugehörigen SON über einen Entfernungsmessvorgang, der durch Berechnen der Laufzeitverzögerung zwischen beiden Knoten ausgeführt wird;
• Speichern der Informationen, die den zugehörigen SON und den abgeschätzten Abstand zu jedem zugehörigen SON betreffen, in einer zugehörigen dynamischen Knotentabelle (ADNT);
• an jedem IN dessen ADNT an den CMN (60) melden;
wobei jeder Knoten des Systems mit einem Sendeempfänger ausgestattet ist;
**dadurch**, **dass** der CMN (60) auch in der Lage ist,
unter Verwendung eines intelligenten Netzwerkrouting-Protokolls die Nachrichtenwege zwischen den Knoten zu erhalten, welche durch die kürzesten verfügbaren Wege festgelegt sind, Speichern der Nachrichtenwege in Wegausbreitungstabellen (PPT);
und **dadurch**, **dass** jede Nachricht des drahtlosen Netzwerks von dem Ursprungsknoten zum Bestimmungsknoten über die Route übertragen wird, die in den PPT festgelegt ist.

6. System nach Anspruch 5, **dadurch gekennzeichnet, dass** die Laufzeitverzögerung zwischen dem IN und jedem zugehörigen SON durch einen Schleifenlaufzeitvorgang (RTOF) (57) erhalten wird, indem die gesamte auf dem Hin- und Rückweg verstrichene Zeit bei einer paarweisen Kommunikation zwischen dem IN und dem SON gemessen wird.

7. System nach einem der Ansprüche 5 - 6, **dadurch gekennzeichnet, dass** die Wegausbreitungstabellen (PPT) an jedem Knoten des drahtlosen Netzwerks gespeichert werden.

8. System nach einem der Ansprüche 5 - 7, **dadurch gekennzeichnet, dass** die drahtlose Kommunikation zwischen den Knoten über Impulsradio hergestellt wird.

## Revendications

1. Procédé pour la communication sans fil et l'estimation de distance entre une pluralité de dispositifs dans un réseau sans fil, le réseau sans fil comprenant un noeud de surveillance central CMN (60), une pluralité de noeuds d'infrastructure IN (61, 62, 63) dont la position est connue avant un processus d'initialisation de réseau, et une pluralité de noeuds opérationnels de système SON (64, 65, 66), chaque noeud étant équipé d'un émetteur-récepteur, **caractérisé en ce que** le procédé comprend :
- le processus d'initialisation de réseau, dans lequel les SON et leurs positions estimées sont obtenus, comprenant les étapes suivantes :
- - commencer une transmission de balise du CMN (60) aux IN (61, 62, 63) ;
- - commencer à chaque IN une transmission de balise pour déterminer quels SON sont dans sa zone de couverture, appelés SON associés ;
- - estimer à chaque IN la distance entre lui-même et chaque SON associé par le biais d'un processus de portée effectué en calculant le délai de propagation entre les deux noeuds ;
- - stocker à chaque IN les informations relatives aux SON associés et la distance estimée à chaque SON associé dans une table de noeuds dynamiques associés (ADNT) ;
- - rapporter à chaque IN son ADNT au CMN (60) ;
- - calculer par triangulation la position absolue estimée des SON (75, 65, 66) ;
- obtenir, en utilisant un protocole d'acheminement de réseau intelligent, des chemins de messages entre des noeuds établis par les plus courts chemins disponibles, et mémoriser lesdits chemins de messages dans des tables de propagation de chemin (PPT) ;
- transmettre chaque message du réseau sans fil du noeud d'origine au noeud de destination à travers l'acheminement établi dans la PPT.

2. Procédé selon la revendication 1, **caractérisé en ce que** le délai de propagation entre l'IN et chaque SON associé est obtenu par un processus de temps de vol aller-retour (RTOF) (57), en mesurant le temps aller-retour écoulé complet dans une communication en paire entre l'IN et les SON.

3. Procédé selon l'une quelconque des revendications précédentes, **caractérisé en ce que** les tables de propagation de chemin (PPT) sont stockées à chaque noeud du réseau sans fil.

4. Procédé selon l'une quelconque des revendications précédentes, **caractérisé en ce que** la communication sans fil entre des noeuds est établie par radio impulsion.

5. Système pour la communication sans fil et l'estimation de distance entre une pluralité de dispositifs dans un réseau sans fil, **caractérisé en ce qu'**il comprend :
- une pluralité de noeuds opérationnels de système SON (64, 65, 66) ;
- un noeud de surveillance central CMN (60), configuré pour calculer par triangulation la position absolue estimée des SON (64, 65, 66) et pour être en interface avec l'utilisateur final du réseau, pour indiquer le statut du réseau et l'abonnement et pour surveiller et contrôler le flux de communication ;
- une pluralité de noeuds d'infrastructure IN (61, 62, 63) dont la position est connue avant un processus d'initialisation de réseau dans lequel les SON et leurs positions estimées sont obtenus, chaque IN étant configuré, dans le processus d'initialisation de réseau, pour :
- - déterminer quels SON sont dans sa zone de couverture, appelés SON associés ;
- - estimer la distance entre lui-même et chaque SON associé par le biais d'un processus de portée effectué en calculant le délai de propagation entre les deux noeuds ;
- - stocker les informations relatives aux SON associés et la distance estimée à chaque SON associé dans une table de noeuds dynamiques associés (ADNT) ;
- - rapporter à chaque IN son ADNT au CMN (60) ;
chaque noeud du système étant équipé d'un émetteur-récepteur ;
**en ce que** le CMN (60) est également capable d'obtenir, en utilisant un protocole d'acheminement de réseau intelligent, des chemins de messages entre des noeuds établis par les plus courts chemins disponibles, et mémoriser lesdits chemins de messages dans des tables de propagation de chemin (PPT) ;
et **en ce que** chaque message du réseau sans fil est transmis du noeud d'origine au noeud de destination à travers l'acheminement établi dans la PPT.

6. Système selon la revendication 5, **caractérisé en ce que** le délai de propagation entre l'IN et chaque SON associé est obtenu par un processus de temps de vol aller-retour (RTOF) (57), en mesurant le temps aller-retour écoulé complet dans une communication en paire entre l'IN et les SON.

7. Système selon l'une quelconque des revendications 5 et 6, **caractérisé en ce que** les tables de propagation de chemin (PPT) sont stockées à chaque noeud du réseau sans fil.

8. Système selon l'une quelconque des revendications 5 à 7, **caractérisé en ce que** la communication sans fil entre des noeuds est établie par radio impulsion.
